Europäisches Patentamt

European Patent Office

Office européen des brevets

(19)

(11)　EP 0 719 828 B1

(12)　FASCICULE DE BREVET EUROPEEN

(45) Date de publication et mention
de la délivrance du brevet:
**14.10.1998  Bulletin 1998/42**

(51) Int Cl.⁶: **C08L 23/08**, C08K 5/14

(21) Numéro de dépôt: **95203531.9**

(22) Date de dépôt: **16.12.1995**

(54) **Compositions à base de polymère du propylène et de copolymère éthylène-acétate de vinyle, procédé pour leur mise en oeuvre, feuilles obtenues à partir de ces compositions**

Propylen Copolymer und Äthylen/Vinylacetat-Copolymerzusammensetzung, Verfahren zu deren Herstellung und daraus hergestellte Platten

Compositions of propylene polymer and ethylene/vinyl acetate copolymer, process for their manufacture and sheets made thereof

(84) Etats contractants désignés:
**BE DE ES FR GB IT**

(30) Priorité: **27.12.1994  BE 9401179**

(43) Date de publication de la demande:
**03.07.1996  Bulletin 1996/27**

(73) Titulaire: **SOLVAY (Société Anonyme)
B-1050 Bruxelles (BE)**

(72) Inventeurs:
- **Matz, Pierre
  B-1380 Ohain (BE)**
- **Mulkens, Edmond
  B-1430 Braine-l'Alleud (BE)**

(74) Mandataire: **Dufrasne, Eugène et al
Solvay S.A.,
Département Propriété Industrielle,
310, rue de Ransbeek
1120 Bruxelles (BE)**

(56) Documents cités:
EP-A- 0 013 084          EP-A- 0 210 306
WO-A-93/13170

## Description

Objet de l'invention.

La présente invention concerne des compositions polymériques à base de polymère du propylène (PP) et de copolymère éthylène-acétate de vinyle (EVA), et contenant en outre au moins un peroxyde organique.

Ces compositions peuvent être mises en oeuvre par extrusion réactive et conduisent à des produits présentant des propriétés remarquables, permettant notamment leur utilisation pour la fabrication de feuilles d'habillage intérieur destinées à l'industrie automobile.

L'invention concerne également un procédé de mise en oeuvre des compositions selon l'invention, pour obtenir des feuilles thermoformables et soudables à haute fréquence.

Arrière-plan technologique et état de la technique.

Depuis de nombreuses années, le marché de l'habillage intérieur des véhicules automobiles est dominé par l'utilisation de feuilles de PVC, soit en combinaison avec l'ABS pour les tableaux de bord, soit fortement plastifié pour l'habillage des portières et la fabrication des pare-soleil.

Quoique les propriétés de ces matériaux soient intéressantes, il y a néanmoins certains inconvénients à utiliser du PVC dans cette application. Outre ceux liés à l'utilisation de plastifiant, tels que le "fogging" (évaporation de constituants volatils, en particulier des plastifiants, et leur dépôt sur les vitres) ou la fragilisation dans le temps, le PVC n'est pas compatible avec la plupart des autres polymères utilisés dans l'industrie automobile, ce qui nécessite sa séparation des autres pièces automobiles avant son éventuel recyclage.

Il y a donc une demande dans l'habillage automobile pour un matériau nouveau combinant les bonnes propriétés intrinsèques du PVC plastifié (tenue à haute et basse températures, thermoformabilité, soudabilité à haute fréquence et souplesse) avec la possibilité de le recycler aisément, notamment par recyclage thermique direct, ou en le réutilisant avec d'autres polymères utilisés dans l'automobile.

Les compositions proposées devraient non seulement assurer d'excellentes propriétés mécaniques et de stabilité aux produits qui en résultent, mais également être soudables à haute fréquence, en vue d'être utilisables dans l'application envisagée. En outre, il convient que la rhéologie des compositions utilisées soit telle qu'elle permette un thermoformage - et en particulier un grainage - de qualité.

Différentes compositions à base de polyoléfines, en particulier d'un homopolymère ou d'un copolymère du propylène, de copolymère éthylène-acétate de vinyle et éventuellement de peroxyde servant d'agent de réticulation lors de la mise en oeuvre, ont déjà été proposées.

Ainsi, le document US-A-3,433,573 décrit un mélange contenant un homopolymère d'oléfine et un copolymère éthylène-acétate de vinyle, auquel on peut ajouter, préalablement au mélange ou au cours de celui-ci, un peroxyde organique en une quantité non spécifiée (colonne 7, lignes 48 à 60).

Ce mélange peut être durci au moyen d'un peroxyde organique dans un mélangeur Banbury, une extrudeuse ou un malaxeur, notamment pour former des feuilles.

Le document WO-93/24568 mentionne des compositions permettant d'obtenir, notamment par extrusion, des produits soudables à haute fréquence, pour diverses applications dans le domaine médical, telles que des poches, sacs, tubes et obturations.

La composition polymérique mise en oeuvre contient au moins un copolymère éthylène-acétate de vinyle, au moins un homopolymère ou un copolymère du propylène, environ 0,01 % à 5 % en poids d'un agent réticulant et environ 0,1 % à 35 % en poids d'un ou plusieurs autres polymères.

Buts visés par la présente invention.

L'invention vise à fournir des compositions soudables à haute fréquence pouvant notamment se substituer au PVC dans les applications de l'habillage automobile, sans entraîner des coûts prohibitifs.

Ces compositions doivent répondre aux critères habituels de ce secteur d'application, notamment pour ce qui concerne l'aptitude au grainage, la tenue à la chaleur et aux U.V., la matité et la résistance au feu, tout en étant recyclables. En particulier, elles doivent être thermoformables, et présenter à cette fin une rhéologie adéquate.

Eléments caractéristiques de l'invention.

Les buts décrits ci-dessus peuvent être atteints par l'utilisation d'une quantité très faible de peroxyde, en combinaison avec des proportions relatives déterminées entre la fraction polymérique constituée de polymère du propylène et celle constituée de copolymère éthylène - acétate de vinyle, dont la teneur en acétate de vinyle est par ailleurs également fixée.

L'invention concerne dès lors des compositions à base de polymère du propylène, de copolymère éthylène-acétate de vinyle et de peroxyde organique, qui se caractérisent en ce qu'elles comprennent, en poids :

a) au moins 10 %, de préférence au moins 20 %, d'au moins un polymère du propylène, dont la quantité soit d'au plus 49 %, de préférence d'au plus 40 % ;
b) au moins 51 %, de préférence au moins 60 %, d'au moins un copolymère éthylène-acétate de vinyle, dont la quantité soit d'au plus 90 %, de préférence d'au plus 80 % , et dont la teneur en acétate de vinyle (par rapport au constituant b) soit d'au moins 12 % en poids, de préférence d'au moins 18 %, tout en étant d'au plus 40 % en poids, de préférence d'au plus 32 % ;
c) plus de 50 ppm (parts par million), de préférence plus de 100 ppm, d'au moins un peroxyde organique, dont la quantité soit de moins de 1000 ppm, de préférence de moins de 500 ppm, de manière particulièrement préférée de moins de 200 ppm.

Les teneurs des constituants a, b et c sont exprimées en poids par rapport à 100 % des constituants a et b.

En outre, il est avantageux que la teneur totale des compositions en acétate de vinyle soit d'au moins 10 %, de préférence d'au moins 15 %, et d'au plus 25 %, de préférence d'au plus 22 %, par rapport au poids total des constituants a et b.

Le constituant a) peut notamment être un homopolymère, un copolymère ou un terpolymère d'alpha-oléfines, statistique et/ou à blocs, ou encore un mélange de tels polymères. Il peut en outre contenir d'autres comonomères. De préférence, il contient au moins 75 % en poids de propylène. Son indice de fluidité en fondu (MFI) (230 °C ; 2,16 kg ; mesuré selon la norme ISO 1133 - version de 1991) est avantageusement inférieur à 10 g/10 min, et de préférence inférieur à 4 g/10 min. Par ailleurs, il est avantageusement d'au moins 0,1 g/10 min, de préférence d'au moins 0,4 g/ 10 min.

Une valeur de MFI (190 °C ; 2,16 kg ; également mesuré selon la norme ISO 1133) supérieure à 0,5 g/10 min, et tout particulièrement supérieure à 1,5 g/10 min, est préférée pour le constituant b). Cette valeur est avantageusement inférieure à 25 g/10 min, de préférence inférieure à 9 g/10 min.

Selon une variante avantageuse de l'invention, les indices de fusion $MFI_a$ et $MFI_b$ des constituants a et b (mesurés dans les conditions respectives susmentionnées et exprimés en g/10 min) répondent à la relation

$$\frac{MFI_a \cdot P_a}{MFI_b \cdot P_b} < 1 \, ,$$

et de préférence

$$\frac{MFI_a \cdot P_a}{MFI_b \cdot P_b} < 0,7 \, ,$$

dans laquelle $P_a$ et $P_b$ désignent les proportions pondérales respectives des constituants a et b ($P_a + P_b = 1$).

De préférence, la température de décomposition ("scorch temperature") du constituant c est supérieure à la température de fusion du constituant b à base de polymère éthylène-acétate de vinyle. La concentration du constituant c est basée sur un pourcentage d'oxygène actif de 10 % en poids. Pour des concentrations différentes, une règle de trois sera appliquée.

Le peroxyde organique est de préférence choisi parmi le 2,5-diméthyl,2,5-di(tert-butylperoxy)hexane (DHBP), le peroxyde de dicumyle (DCUP), le peroxyde de tert-butylcumyle (BCUP), le peroxyde de di-tertbutyle (DTBP), le 2,5-diméthyl,2,5-di(tert-butylperoxy)hexyne-3 (DYBP) ou le 1-3-di(2-tert-butylperoxy-isopropyl)benzène (DIPP).

La quantité de constituant c indiquée se rapporte à l'hypothèse de son utilisation complète en tant qu'agent réticulant lors de l'extrusion réactive.

Si les résines utilisées contiennent des additifs diminuant l'effet du peroxyde, tels que des antioxydants, ou si les conditions opératoires sont telles que le peroxyde ne peut pas totalement réagir, en particulier lorsque le temps de séjour dans l'extrudeuse est inférieur au temps nécessaire à la réaction, lesdites quantités de constituant c devront être adaptées pour que la teneur active de peroxyde soit suffisante. De préférence, on s'abstient d'ajouter des antioxydants aux constituants utilisés.

Outre les constituants a, b et c, les compositions de l'invention peuvent éventuellement contenir un ou plusieurs additifs et/ou charges connus, n'entraînant pas un accroissement en poids ou en volume de la formulation de plus de 25 % (par rapport à la somme des constituants a et b). A titre d'exemples d'additifs, on peut citer les ignifugeants, les anti-UV, les lubrifiants et les pigments. A titre d'exemples de charges, on peut citer le carbonate de calcium, le sulfate de baryum, les fibres de matériaux cellulosiques, les fibres de verre, etc.

Les compositions ainsi définies permettent d'obtenir toutes les propriétés demandées en vue des applications susmentionnées, en ce compris la souplesse, une thermoformabilité aisée, la soudabilité à haute fréquence, la tenue au feu, et d'excellentes propriétés à haute et basse températures. La composition de l'invention est facilement recyclable, car elle est beaucoup plus compatible avec les autres polymères généralement utilisés dans l'industrie automobile.

Le constituant c) peut être ajouté en tant que tel aux constituants a et b, ou y être introduit sous la forme d'un mélange-maître constitué de ce constituant et d'un porteur compatible. Il en va de même pour les éventuels additifs et/ou charges. Le constituant c peut être en particulier mis en oeuvre sur un porteur essentiellement constitué de polyéthylène. De préférence, le porteur éventuel du constituant c ne représente pas plus de 5 % du poids total des constituants a et b.

L'invention concerne également un procédé de mise en oeuvre d'une composition telle que décrite ci-dessus, qui se caractérise en ce qu'il comprend une étape d'extrusion réactive de la composition. De préférence, l'extrusion réactive s'effectue dans une extrudeuse munie d'une filière plate, ce qui permet d'obtenir directement une feuille au départ des constituants du mélange. De bons résultats ont été obtenus en évitant d'effectuer un mélange préalable des constituants de la composition (compoundage), c'est-à-dire en procédant à la mise en oeuvre en une seule étape.

La feuille obtenue peut avantageusement être grainée, colaminée ou laquée en ligne après son extrusion, mais elle peut aussi encore subir des traitements de ce type ultérieurement à sa production.

Dans les conditions opératoires de l'extrusion réactive pour ce type de compositions, il semblerait - sans que cette interprétation puisse être limitative - que les macroradicaux des deux polymères (EVA - PP) puissent réagir ensemble. Il se formerait alors des copolymères EVA - PP à branchements longs. Ce type de copolymères est idéal pour compatibiliser deux polymères incompatibles. D'autre part, il se formerait des branchements EVA sur d'autres EVA et une dépolymérisation du PP.

La formation de branchements longs est très intéressante pour les applications où l'on doit thermoformer la feuille. Ces branchements entraînent une amélioration des propriétés visco-élastiques à bas gradient de vitesse (tenue en fondu et thermoformabilité) sans accroître la viscosité à haut gradient comme l'aurait fait un polymère ou un mélange de polymères à structure linéaire à plus haut poids moléculaire. L'extrudabilité est ainsi assurée. Ces branchements, outre la propriété de haute tenue en fondu ("high melt strength"), apportent du durcissement structural ("strain hardening") dû aux enchevêtrements ("entanglements") formés entre les macromolécules. Cette propriété permet de régulariser l'épaisseur lors du thermoformage d'une feuille. On évite ainsi d'obtenir des zones significativement plus étirées que d'autres.

L'accroissement important de la viscosité à bas gradient d'extrusion est également intéressant, car il provoque des micro-irrégularités à la surface de la feuille extrudée et lui donne donc un aspect mat et un toucher sec.

L'invention concerne également les feuilles soudables à haute fréquence obtenues au départ d'une composition conforme à l'invention, telle que décrite ci-dessus. Elle s'étend en outre aux structures multicouches dont au moins une couche est une feuille telle que décrite ci-dessus. Un avantage intéressant de l'invention est que les feuilles mates conformes à l'invention conservent substantiellement leur matité après un thermoformage, contrairement aux feuilles connues, dont les zones fortement déformées lors d'un thermoformage deviennent relativement lisses et brillantes, ce qui donne à l'ensemble de la feuille un aspect hétérogène rédhibitoire.

Elle concerne encore l'utilisation de ces feuilles pour l'habillage intérieur dans l'industrie automobile. Elle concerne enfin l'utilisation des feuilles réalisées selon le procédé de l'invention pour l'habillage intérieur dans l'industrie automobile.

Les compositions de l'invention trouvent par ailleurs une application particulièrement intéressante dans la compatibilisation de mélanges d'EVA et d'un ou plusieurs autres polymères (tels que notamment des polymères du propylène) exempts de peroxyde : en ajoutant à de tels mélanges une faible quantité d'une composition conforme à l'invention, il est possible d'améliorer fortement la compatibilité de l'EVA et du ou des autres polymères dudit mélange.

L'invention concerne enfin des feuilles comprenant, en poids, 10 à 49 % d'au moins un polymère du propylène et 90 à 51 % d'au moins un copolymère éthylène-acétate de vinyle dont la teneur en acétate de vinyle est d'au moins 12 et d'au plus 40 % en poids, qui se caractérisent à la fois par un rapport $\mu_{0,25}/\mu_{100}$ (ces paramètres désignant la viscosité en cisaillement, mesurée par un rhéogoniomètre, à 170 °C, respectivement à 0,25 s$^{-1}$ et 100 s$^{-1}$) supérieur à 25 et par un rapport $\mu_{maxF}/\mu_{0,2s}$ (ces paramètres désignant respectivement la viscosité élongationnelle pour laquelle la force de traction exercée sur l'échantillon est maximale, et celle mesurée après 0,2 s de traction, chaque fois à 170°C) supérieur à 5.

Description détaillée de modes d'exécution de l'invention.

L'invention sera décrite plus en détail en référence à des exemples non-limitatifs d'exécution (exemples 1, 2, 5 et 6) en vue de l'obtention d'une feuille destinée à l'habillage automobile répondant aux critères habituels des cahiers de charges de ce secteur.

Les exemples 3R, 4R et 7R constituent des exemples comparatifs qui ne correspondent pas aux conditions de l'invention et conduisent à des produits ne répondant pas à l'ensemble de ces critères.

## Exemple 1

La composition est obtenue par le malaxage à haute température, dans une extrudeuse, d'un mélange contenant :

1) 30 % de PP Eltex® P HL011 de Solvay, sous forme de fluff;
2) 70 % d'EVA Escorene® UL00328 de Exxon sous forme de granules;
3) 1 pcr d'un mélange-maître de peroxyde DHBP de Peroxyde Chemie adsorbé sur un fluff de polyéthylène (PE), correspondant à 500 ppm de peroxyde.

Pour faciliter l'incorporation précise et continue du peroxyde liquide, il a été dilué et adsorbé sur une poudre de PE au moyen d'un mélangeur rapide du type Papenmeyer.

Ces trois produits 1), 2) et 3) ont été déversés par des doseurs séparés dans la trémie d'alimentation de la compoundeuse, qui est ici une extrudeuse double vis Clextral BC 21. Pour assurer un dosage régulier, la vis doit rester découverte dans la zone d'alimentation. On a en outre incorporé à cette composition 2 pcr de noir de carbone.

Le profil de vis comprend deux zones de mise en pression suivies chacune par une zone de malaxage intense. La dernière zone de malaxage est suivie par une zone de décompression munie d'un évent de dégazage pour extraire les résidus volatils de décomposition.

La matière est ensuite remise en pression pour pouvoir passer à travers une filière à trous. Le ou les joncs ainsi formés sont ensuite découpés sous forme de granules. Le profil de température utilisé est le suivant (en °C) :

| Z1 | Z2 | Z3 | Z4 | Z5 | Z6 | Z7 | Z8 |
|----|-----|-----|-----|-----|-----|-----|------|
| 50 | 170 | 180 | 200 | 210 | 220 | 220 | 220, |

où la zone Z1 correspond à l'alimentation et les zones Z7 et Z8 à la filière.

La vitesse de l'extrudeuse est fixée à 300 tr/min, le débit total est de 10 kg/h, le temps moyen de séjour dans l'extrudeuse, mesuré au moyen de granules colorés, est d'environ 25 s pour ces profil et vitesse de vis. L'énergie spécifique consommée est de 0,204 kWh/kg.

Le compound produit sous forme de granules est ensuite extrudé sous forme de feuille au moyen d'une extrudeuse monovis munie d'une filière plate, sur un cylindre de type "chill roll". La température des cylindres est maintenue entre 50 et 60 °C.

La vis a un profil adéquat pour les polyoléfines. Sa longueur est de 25 D (D représentant son diamètre) pour un taux de compression de 2,6.

## Exemple 2

Les étapes de compoundage et d'extrusion en filière plate ont été combinées en une seule étape. Dans cet exemple, en respectant les paramètres de l'exemple 1, on a remplacé la filière à joncs de la compoundeuse par une filière plate.

Les feuilles obtenues à partir de cette formulation, que ce soit en deux étapes (ex. 1) ou en une seule étape (ex. 2), permettent d'atteindre un bon compromis entre les différentes propriétés nécessaires pour l'habillage automobile.

## Exemple 3R

On a procédé comme dans l'exemple 1, mais en l'absence de peroxyde. Dans ces conditions, il n'est pas possible d'obtenir des feuilles dont l'étirage est uniforme lors du thermoformage (propriété de "strain hardening"). Ces feuilles ont un aspect brillant et un toucher gras, ce qui les rend inesthétiques et impropres à une application de revêtement intérieur automobile.

## Exemple 4R

En procédant comme dans l'exemple 1, mais en utilisant cependant 3000 ppm de DHBP, on observe une dégradation des propriétés telle qu'il est difficile d'extruder le produit sous forme de feuilles.

De plus, les feuilles éventuellement produites se déchirent lors du thermoformage, et présentent la formation de gel, d'où l'impossibilité de les utiliser pour l'application visée.

<u>Exemple 5</u>

L'utilisation d'un copolymère à blocs du propylène permet également d'obtenir des compounds aptes à l'application envisagée, pour autant que la formulation remplisse les caractéristiques de l'invention.

La composition suivante a été mise en oeuvre dans les conditions de l'exemple 1 :

1) 30 % du copolymère à blocs Eltex P RL001 de Solvay ;
2) 70 % d'EVA Escorene UL00328 d'Exxon;
3) 450 ppm de DHBP adsorbé à 5 % sur du LLDPE en fluff.

<u>Exemple 6</u>

De même, un polypropylène obtenu suivant le procédé Catalloy® d'Himont convient. La composition suivante a été mise en oeuvre suivant les conditions de l'exemple 1 :

1) 40 % du polymère PP Catalloy Hifax® CA10A d'Himont;
2) 60 % d'EVA Escorene UL00328 d'Exxon;
3) 450 ppm de DHBP adsorbé à 5 % sur du LLDPE en fluff.

<u>Exemple 7R</u>

Si on omet d'incorporer la quantité nécessaire de peroxyde, les propriétés de la feuille obtenue à partir de ce mélange ne conviennent pas pour l'application en habillage intérieur automobile.

Cet exemple comparatif a été réalisé sur base de la composition suivante :

1) 40 % du polymère PP Catalloy Hifax CA10A d'Himont;
2) 60 % d'EVA Escorene UL00328 d'Exxon.

Les propriétés des produits de ces différents exemples figurent dans le tableau I.

Les techniques d'évaluation utilisées sont les suivantes :

<u>Viscosité en cisaillement</u>

La viscosité en cisaillement, les modules d'élasticité et visqueux sont évalués sur un rhéogoniomètre R.D.S. de marque Rheometrics, dans lequel l'échantillon est placé entre deux disques plans et soumis à des déformations en cisaillement de faible amplitude, à une température de 170 °C.

Le rapport de la viscosité à bas gradient (0,25 s$^{-1}$) sur la viscosité à haut gradient (100 s$^{-1}$) permet de quantifier la tenue en fondu relative du polymère. Plus ce rapport est élevé, meilleure sera la tenue en fondu du matériau. Cette tenue en fondu est nécessaire pour éviter l'effondrement (sagging) de la feuille lors de son chauffage avant son thermoformage.

<u>Viscosité élongationnelle</u>

La viscosité élongationnelle est évaluée par un viscosimètre élongationnel Rheometrics R.E.R. qui permet d'évaluer le comportement en traction des polymères fondus. L'échantillon est placé entre deux mordaches, l'une fixe, l'autre mobile, puis plongé dans un bain d'huile conditionné à la température de mesure souhaitée (ici, 170 °C).

La mordache supérieure, solidaire d'une barre d'étirage entraînée par un moteur, impose à l'extrémité supérieure de l'éprouvette un déplacement ($\ell$) évoluant dans le temps (t) selon la relation $\ell = \ell_0 . e^{H.t}$, dans laquelle $\ell_0$ désigne la longueur initiale de l'éprouvette, le taux d'élongation H ("Hencky strain rate") étant fixé à 1 s$^{-1}$.

Pour obtenir une feuille dont l'étirage est uniforme lors du thermoformage, il est nécessaire que lors de son étirage, elle présente du durcissement structural (strain hardening). Le durcissement structural se caractérise par un accroissement important de la viscosité du polymère lors de l'étirage élongationnel de celui-ci. On peut le quantifier en comparant la viscosité obtenue au maximum de la force d'étirage avec la viscosité élongationnelle initiale du polymère. Elle a été mesurée après un très faible temps d'étirage (0,2 s) de l'échantillon.

<u>Aspect</u>

Deux caractéristiques importantes pour l'application sont d'une part la matité et d'autre part un toucher sec de la feuille.

La première caractéristique peut être mesurée par la brillance ("gloss") de la feuille. Plus cette valeur est faible, meilleure est la feuille.

L'évaluation du toucher est une comparaison subjective de différentes feuilles.

<u>Propriétés mécaniques</u>

Les propriétés mécaniques sont mesurées par un test de traction sur un instrument de la marque Instron®. L'échantillon possède une longueur de 50 mm et la vitesse de traction imposée est de 100 mm/min. Le module est pris entre 1 et 2 % d'allongement.

<u>Tenue au feu</u>

La résistance à la flamme est évaluée suivant la norme MVSS302 (ISO 3795 - version du 15.10.1989). On mesure la vitesse de propagation de la flamme après avoir bouté le feu à la feuille à tester. La recommandation des constructeurs impose une vitesse de propagation inférieure à 100 mm/min.

<u>Soudabilité à haute fréquence</u>

Celle-ci est évaluée par un test de traction similaire à celui effectué pour la mesure des propriétés mécaniques. Le critère de soudabilité utilisé impose que la contrainte soit supérieure à 50 % de la contrainte de rupture mesurée sur un échantillon de même taille. La soudure est effectuée durant des temps de 2 à 10 secondes, sur une machine Colpitt de 3 kW de puissance.

Les résultats repris au tableau I pour les compositions conformes à l'invention permettent de conclure que les feuilles produites à partir de celles-ci présentent l'ensemble des qualités généralement demandées aux feuilles de PVC plastifié, sans en avoir les inconvénients cités plus haut.

De plus, le prix de ces formulations est inférieur à celui des formulations commerciales comparables à base d'EPDM et de PP ou d'EPR et de PP, tout en permettant le soudage à haute fréquence.

Ces feuilles conviennent notamment pour l'habillage des portières et les pare-soleil, ainsi que pour d'autres parties de l'habillage intérieur automobile.

Dans le tableau qui suit, les abréviations suivantes sont utilisées :

| | |
|---|---|
| $\mu_{0,25}$ | viscosité en cisaillement (mesurée par un rhéogoniomètre Rheometrics R.D.S.) à 0,25 $s^{-1}$ ; |
| $\mu_{100}$ | idem à 100 $s^{-1}$ ; |
| $\mu_{maxF}$ | viscosité élongationnelle (mesurée sur viscosimètre élongationnel Rheometrics R.E.R.) pour laquelle la force de traction exercée sur l'échantillon est maximale ; |
| $\mu_{0,2s}$ | idem après 0,2 s de traction ; |
| $\sigma_R/2$ | moitié de la contrainte à la rupture. |

| Propriétés | Méthode de mise en évidence | Caractéri-sation | Critère de qualité | Exemples | | | | | | |
|---|---|---|---|---|---|---|---|---|---|---|
| | | | | 1 | 2 | 3R | 4R | 5 | 6 | 7R |
| **• Thermoformabilité** | | | | | | | | | | |
| - absence de sagging | R.D.S. 170 °C | $\mu_{0,25}/\mu_{100}$ | > 25 | 43 | 41 | 21 | 130 | 71 | 34 | 14 |
| - bonne répartition d'épaisseur | R.E.R. 170 °C | $\mu_{maxF}/\mu_{0,2s}$ | > 5 | 10,6 | 16 | 3,7 | 2,6 | 10,1 | 13,3 | 3 |
| **• Aspect** | | | | | | | | | | |
| - matité | gloss | | | bon | bon | brillant | bon | bon | bon | brillant |
| - toucher sec | | | | bon | bon | gras | bon | bon | bon | gras |
| - fish eyes | visuel | | | bon | bon | bon | nom-breux | bon | bon | bon |
| **• Autres** | | | | | | | | | | |
| - propriétés mécaniques : | essai de traction | | | | | | | | | |
| - module (MPa) | suivant cahier charges | | | 190 | 170 | 180 | 100 | 90 | 20 | 22 |
| - contrainte à la rupture(MPa) | | | > 15 | 20 | 32 | 28 | 12,5 | 21,3 | 19 | 18 |
| - allongement à la rupture (%) | | | > 400 | 623 | 900 | 1000 | 361 | 680 | 770 | 950 |
| - tenue au feu (mm/min) | MVSS702 (vitesse de propagation) | | < 100 | 92 | 93 | 123 | 89 | 87 | 95 | 128 |
| - soudabilité à haute fréquence | essai de traction sur soudure | | > $\sigma_R/2$ | bon | bon | bon | non | bon | bon | bon |

EP 0 719 828 B1

**Revendications**

1. Compositions à base de polymère du propylène, de copolymère éthylène-acétate de vinyle et de peroxyde organique, caractérisées en ce qu'elles comprennent, en poids :

   a) 10 à 49 % d'au moins un polymère du propylène ;
   b) 90 à 51 % d'au moins un copolymère éthylène-acétate de vinyle dont la teneur en acétate de vinyle est d'au moins 12 et d'au plus 40 % en poids ;
   c) plus de 50 ppm (parts par million) et moins de 1000 ppm d'au moins un peroxyde organique.

2. Compositions selon la revendication 1, caractérisées en outre en ce que les indices de fusion $MFI_a$ et $MFI_b$ des constituants a (conditions de mesure : 230°C ; 2,16 kg) et b (conditions de mesure : 190°C ; 2,16 kg), exprimés en g/10 min, répondent à la relation

$$\frac{MFI_a \cdot P_a}{MFI_b \cdot P_b} < 1 \ ,$$

   dans laquelle $P_a$ et $P_b$ désignent les proportions pondérales respectives des constituants a et b.

3. Compositions selon l'une quelconque des revendications 1 ou 2, caractérisées en outre en ce que le constituant b) présente une valeur de MFI (190°C ; 2,16 kg) supérieure à 0,5 g/10 min.

4. Compositions selon l'une quelconque des revendications précédentes, caractérisées en outre en ce que la température de décomposition du constituant c est supérieure à la température de fusion du constituant b.

5. Compositions selon l'une quelconque des revendications précédentes, caractérisées en outre en ce que le peroxyde organique est choisi parmi le 2,5-diméthyl,2,5-di(tert-butylperoxy)hexane (DHBP), le peroxyde de dicumyle (DCUP), le peroxyde de tert-butylcumyle (BCUP), le peroxyde de di-tertbutyle (DTBP), le 2,5-diméthyl,2,5-di(tert-butylperoxy)hexyne-3 (DYBP) ou le 1-3-di(2-tert-butylperoxy-isopropyl)benzène (DIPP).

6. Compositions selon l'une quelconque des revendications précédentes, caractérisées en outre en ce que le constituant c est présent sous la forme d'un mélange-maître constitué de ce constituant et d'un porteur compatible, ce porteur ne représentant pas plus de 5 % du poids total des composants a et b.

7. Compositions selon la revendication 6, caractérisées en ce que le porteur est essentiellement constitué de polyéthylène.

8. Procédé de mise en oeuvre d'une composition selon l'une quelconque des revendications précédentes, caractérisé en ce qu'il comprend une étape d'extrusion réactive de la composition.

9. Procédé selon la revendication 8, caractérisé en outre en ce que l'extrusion réactive s'effectue dans une extrudeuse munie d'une filière plate.

10. Procédé selon l'une quelconque des revendications 8 ou 9, caractérisé en outre en ce que les constituants de la composition sont mis en oeuvre sans mélange préalable de ces constituants.

11. Procédé selon l'une quelconque des revendications 8 à 10, caractérisé en outre en ce qu'après son extrusion, la feuille obtenue est grainée, colaminée ou laquée en ligne.

12. Feuilles soudables à haute fréquence, caractérisées en ce qu'elles sont obtenues au départ d'une composition selon l'une quelconque des revendications 1 à 7.

13. Feuilles comprenant, en poids, 10 à 49 % d'au moins un polymère du propylène et 90 à 51 % d'au moins un copolymère éthylène-acétate de vinyle dont la teneur en acétate de vinyle est d'au moins 12 et d'au plus 40 % en poids, caractérisées par un rapport $\mu_{0,25} / \mu_{100}$ (ces paramètres désignant respectivement la viscosité en cisaillement, mesurée par un rhéogoniomètre, à 170 °C, respectivement à 0,25 $s^{-1}$ et 100 $s^{-1}$) supérieur à 25 et par un rapport $\mu_{maxF} / \mu_{0,2s}$ (ces paramètres désignant respectivement la viscosité élongationnelle pour laquelle la force de traction exercée sur l'échantillon est maximale, et celle mesurée après 0,2 s de traction, chaque fois à 170°C) supérieur à 5.

## Claims

1. Compositions based on propylene polymer, ethylene-vinyl acetate copolymer and organic peroxide, characterized in that they include, by weight:

   a) 10 to 49 % of at least one propylene polymer;
   b) 90 to 51 % of at least one ethylene-vinyl acetate copolymer in which the vinyl acetate content is at least 12 and not more than 40 % by weight;
   c) more than 50 ppm (parts per million) and less than 1000 ppm of at least one organic peroxide.

2. Compositions according to Claim 1, additionally characterized in that the melt indices $MFI_a$ and $MFI_b$ of the constituents a (measurement conditions: 230°C; 2.16 kg) and b (measurement conditions: 190°C; 2.16 kg), expressed in g/10 min, correspond to the relationship

$$\frac{MFI_a \times W_a}{MFI_b \times W_b} < 1$$

   in which $W_a$ and $W_b$ denote the respective weight proportions of the constituents a and b.

3. Compositions according to either of Claims 1 and 2, additionally characterized in that the constituent b) has an MFI (190°C; 2.16 kg) value higher than 0.5 g/10 min.

4. Compositions according to any one of the preceding claims, additionally characterized in that the decomposition temperature of the constituent c is higher than the melting temperature of the constituent b.

5. Compositions according to any one of the preceding claims, additionally characterized in that the organic peroxide is chosen from 2,5-dimethyl-2,5-di(tertbutylperoxy)hexane (DHBP), dicumyl peroxide (DCUP), tertbutyl cumyl peroxide (BCUP), di-tert-butyl peroxide (DTBP), 2,5-dimethyl-2,5-di(tert-butylperoxy)-3-hexyne (DYBP) and 1,3-di (2-tert-butylperoxyisopropyl)benzene (DIPP).

6. Compositions according to any one of the preceding claims, additionally characterized in that the constituent c is present in the form of a master mixture consisting of this constituent and of a compatible carrier, this carrier representing not more than 5 % of the total weight of the components a and b.

7. Compositions according to Claim 6, characterized in that the carrier consists essentially of polyethylene.

8. Process for converting a composition according to any one of the preceding claims, characterized in that it includes a stage of reactive extrusion of the composition.

9. Process according to Claim 8, additionally characterized in that the reactive extrusion is performed in an extruder fitted with a slot die.

10. Process according to either of Claims 8 and 9, additionally characterized in that the constituents of the composition are converted without preliminary mixing of these constituents.

11. Process according to any one of Claims 8 to 10, additionally characterized in that, after its extrusion, the sheet obtained is grained, colaminated or lacquered in line.

12. High-frequency weldable sheets characterized in that they are obtained from a composition according to any one of Claims 1 to 7.

13. Sheets including, by weight, 10 to 49 % of at least one propylene polymer and 90 to 51 % of at least one ethylene-vinyl acetate copolymer in which the vinyl acetate content is at least 12 and not more than 40 % by weight, char-

acterized by a $\mu_{0.25}/\mu_{100}$ (these parameters denoting the shear viscosity measured using a rheogoniometer, at 170°C, at 0.25 s$^{-1}$ and 100 s$^{-1}$ respectively) ratio higher than 25 and by a $\mu_{maxF}/\mu_{0.2s}$ (these parameters denoting, respectively, the elongational viscosity at which the tensile force exerted on the sample is at a maximum, and that measured after 0.2 s of pulling, both at 170°C) ratio higher than 5.

**Patentansprüche**

1. Zusammensetzungen auf der Basis von Propylenpolymer, Ethylen/Vinylacetat-Copolymer und organischem Peroxid, dadurch gekennzeichnet, daß sie in Gewicht

   a) 10 bis 49% wenigstens eines Propylenpolymers;
   b) 90 bis 51% wenigstens eines Ethylen/Vinylacetat-Copolymers, dessen Gehalt an Vinylacetat wenigstens 12 und höchstens 40 Gew.-% ist;
   c) mehr als 50 ppm (parts per million) und weniger als 1000 ppm wenigstens eines organischen Peroxids

   umfassen.

2. Zusammensetzungen gemäß Anspruch 1, außerdem dadurch gekennzeichnet, daß die Schmelzindizes MFI$_a$ und MFI$_b$ der Bestandteile a (Meßbedingungen: 230 °C; 2,16 kg) und b (Meßbedingungen: 190 °C; 2,16 kg), ausgedrückt in g/10 min, der Beziehung

$$\frac{MFI_a \cdot P_a}{MFI_b \cdot P_b} < 1 \,,$$

   entsprechen, in der P$_a$ und P$_b$ die jeweiligen Gewichtsanteile der Bestandteile a und b bezeichnen.

3. Zusammensetzungen gemäß einem der Ansprüche 1 oder 2, außerdem dadurch gekennzeichnet, daß der Bestandteil b) einen MFI-Wert (190 °C; 2,16 kg) höher als 0,5 g/10 min aufweist.

4. Zusammensetzungen gemäß einem der vorhergehenden Ansprüche, außerdem dadurch gekennzeichnet, daß die Zersetzungstemperatur des Bestandteils c höher als die Schmelztemperatur des Bestandteils b ist.

5. Zusammensetzungen gemäß einem der vorhergehenden Ansprüche, außerdem dadurch gekennzeichnet, daß das organische Peroxid ausgewählt ist unter 2,5-Dimethyl-2,5-di(tert-butylperoxy)hexan (DHBP), Dicumylperoxid (DCUP), tert-Butylcumylperoxid (BCUP), Di-tert-butylperoxid (DTBP), 2,5-Dimethyl-2,5-di(tertbutylperoxy)hex-3-in (DYBP) oder 1,3-Di(2-tert-butylperoxy-isopropyl)benzol (DIPP).

6. Zusammensetzungen gemäß einem der vorhergehenden Ansprüche, außerdem dadurch gekennzeichnet, daß der Bestandteil c in Form eines Masterbatches vorliegt, der aus diesem Bestandteil und aus einem kompatiblen Träger besteht, wobei dieser Träger nicht mehr als 5% des Gesamtgewichts der Bestandteile a und b darstellt.

7. Zusammensetzung gemäß Anspruch 6, dadurch gekennzeichnet, daß der Träger im wesentlichen aus Polyethylen besteht.

8. Verfahren zur Verarbeitung einer Zusammensetzung gemäß einem der vorhergehenden Ansprüche, dadurch gekennzeichnet, daß es eines Schritt der reaktiven Extrusion der Zusammensetzung umfaßt.

9. Verfahren gemäß Anspruch 8, außerdem dadurch gekennzeichnet, daß die reaktive Extrusion in einem mit einer flachen Düse ausgestatteten Extruder ausgeführt wird.

10. Verfahren gemäß einem der Ansprüche 8 oder 9, außerdem dadurch gekennzeichnet, daß die Bestandteile der Zusammensetzung ohne vorheriges Mischen dieser Bestandteile verarbeitet werden.

11. Verfahren gemäß einem der Ansprüche 8 bis 10, außerdem dadurch gekennzeichnet, daß die nach ihrer Extrusion erhaltene Folie in Reihe genarbt, colaminiert oder lackiert wird.

12. Folien, die mit hoher Frequenz schweißbar sind, dadurch gekennzeichnet, daß sie aus einer Zusammensetzung gemäß einem der Ansprüche 1 bis 7 erhalten werden.

13. Folien, die, in Gewicht, 10 bis 49% wenigstens eines Propylenpolymers und 90 bis 51% wenigstens eines Ethylen/Vinylacetat-Copolymers, dessen Gehalt an Vinylacetat wenigstens 12 und höchstens 40 Gew.-% beträgt, umfassen, gekennzeichnet durch ein Verhältnis $\mu_{0,25}/\mu_{100}$ (wobei diese Parameter jeweils die Scherviskosität, gemessen mit einem Rheogoniometer, bei 170 °C bei 0,25 s$^{-1}$ beziehungsweise 100 s$^{-1}$ bezeichnen) höher als 25 und durch ein Verhältnis $\mu_{maxF}/\mu_{0,2s}$ (wobei diese Parameter die Dehnviskosität bezeichnen, für die die auf die Probe ausgeübte Zugkraft maximal ist, beziehungsweise diejenige, die nach 0,2 s Zug gemessen wird, jedes Mal bei 170 °C) höher als 5.